# EUROPEAN PATENT SPECIFICATION

(11) **EP 1 340 228 B1**
(45) Date of publication and mention of the grant of the patent: **31.05.2006**
(21) Application number: 01976112.1
(22) Date of filing: 18.08.2001
(51) Int. Cl.: G11B 23/00

(54) **DATA STORAGE SYSTEM WITH SELECTIVELY TRIGGERED TRANSPARENT SWAPPING OF CONTINUOUSLY MOUNTED REMOVABLE DATA STORAGE MEDIA**
DATENSPEICHERUNGSSYSTEM ZUM SELEKTIV AUSGELÖSTEN TRANPARENTEN AUSTAUSCHEN VON KONTINUIERLICH INSTALLIERTEN AUSWECHSELBAREN DATENSPEICHERMEDIEN
SYSTEME DE STOCKAGE DE DONNEES AVEC ECHANGE TRANSPARENT DECLENCHE SELECTIVEMENT DES SUPPORTS AMOVIBLES DE STOCKAGE DE DONNEES MONTES EN CONTINU

(30) Priority: 28.09.2000 US 672070
(43) Date of publication of application: 03.09.2003
(73) Proprietor: International Business Machines Corporation, Armonk, NY 10504 (US)
(72) Inventor: ASHTON, Lyn, Lequam, Tucson, AZ 85716 (US); BEARDSLEY, Carol, E., Tucson, AZ 85747 (US); LE, Cuong, Minh, Tucson, AZ 85748 (US); PENCE, Jerry, Wayne, Tucson, AZ 85742 (US); RATLIFF, James, Mitchell, Benson, AZ 85602 (US); PEARSON, Anthony, Steve, Tucson, AZ 85711 (US)
(74) Representative: Duscher, Reinhard
(86) International application number: PCT/EP2001/009548
(87) International publication number: WO 2002/027724

(56) References cited:
- US-A- 5 455 926
- US-A- 5 654 839
- US-A- 5 875 481

## Description

### BACKGROUND OF THE INVENTION

### 1. Field of the Invention

The present invention relates to data storage systems that employ storage drives for accessing removable data storage media. More particularly, the storage system of this invention responds to operator-specified "switch-media" events by demounting all continuously mounted idle storage media and substituting replacement media therefor. Non-idle storage media are scheduled for later demounting and replacement. In systems with large capacity media and/or slow data accumulation, the invention decreases the system's otherwise lengthy period of vulnerability to data loss while data gradually accumulates pending media saturation and demounting.

### 2. Description of the Related Art

With the increasing importance of electronic information today, there is a similar increase in the importance of reliable data storage. The market abounds with different means of data storage today, ranging from high-speed, more expensive products such as random access memory (RAM), to slower speed, less expensive products such as magnetic tape. Once consumers recognize the importance of reliably storing data, many also recognize the critical value of backup storage, in case the stored data is lost through accident, device failure, catastrophe, etc.

Magnetic tape is one of the most popular types of backup storage media because of its large storage capacity and affordable expense. In the early days of backup technology, magnetic tape backup operations were performed in "batch" style. Namely, the tape storage system was loaded with one or more tapes in the late evening or another convenient backup time, and the storage system was invoked to copy all source data to tape backup.

More recently, consumers have favored "event-driven" backups, which are backups of datasets performed during ongoing operation of the storage system instead of at pre-arranged "batch" times. Event-driven backups are triggered by particular events, such as arrival of a particular time, commencement of a data storage transaction, user request, or any other pertinent storage or processing event. One example of an event-driven backup is a periodic auto-save operation. Another example is the backup storage of a bank account record before completing a new transaction, in order to preserve the ability to restore the bank account record to its previous state in case that new transaction fails. In some cases, event-driven backups are achieved using a single tape mounted to a single tape drive. In other cases, larger event-driven backups can be performed by storing data to multiple tapes in parallel, by using multiple tape drives concurrently.

Event-driven backups and batch backups both present a number of challenges from the standpoint of tape management. Particularly, one tape rarely contains sufficient storage capacity to backup the entire storage system. Therefore, backup datasets reside across a great number of tapes. Furthermore, in the case of expedited backup operations using multiple tape drives in parallel, some backup datasets may be spread across multiple tapes. Additionally, tapes are also getting larger in capacity, which causes tapes to be mounted longer while continuously processing requests,

Unlike batch backups, where the storage system copies data en masse during a lengthy backup session, event-driven backups present a number of further challenges. One such challenge concerns the arrival time and rate of the individual data set backup requests, which can be random and difficult to predict. Since a major cause of overhead and potential delay in the data set backup process is the allocation of a tape drive and mounting of a tape cartridge, some systems provide for the continued allocation and mounting of tape cartridges even after completing a particular backup request. In one implementation, a storage administrator can direct the system to keep a tape drive allocated and tape cartridge mounted for a specified period of time after processing the last backup request. Under most conditions, storage systems do not demount a tape cartridges until the cartridge is filled to capacity.

Today's magnetic tape technology offers very large capacity tape cartridges, some exceeding twenty gigabytes after compaction. With the random and possibly infrequent arrival of event-driven backup requests, a single large-capacity tape cartridge might be mounted for days or weeks before reaching its data storage capacity. Although this condition is advantageous from the standpoint of minimizing mount and allocation overhead, it presents some danger of data loss. Namely, the length of time at which data resides on the mounted tape cartridge coupled with the especially large tape capacity translates into a higher likelihood of substantial data loss if the mounted tape cartridge experiences mechanical failure, destruction in natural disaster, etc. Moreover, such data loss may be non-recoverable if the customer's disaster recovery plan relies solely on the manual removal of tapes from the storage system and storage in an off-site location. This may be the case, for example, if the customer's storage site does not have electronically connected, remotely located duplexing capabilities.

Consequently, known tape backup approaches may not be completely adequate due to unsolved problems such as those mentioned above.

### SUMMARY OF THE INVENTION

Broadly, the present invention concerns a method of managing continuously mounted backup storage media to decrease the otherwise lengthy period of vulnerability to data loss while data gradually accumulates pending media saturation and demounting. Basically, responsive to operator-specified switch-media events, continuously mounted storage media are demounted if idle, and substituted with replacement media. If busy, continuously mounted storage media are scheduled for later demounting and replacement.

Initially, a data storage system receives specification of one or more switch-media events, such as arrival of a particular time, completion of a particular task in the system, occurrence of a particular condition outside the system, etc. The data storage system detects arrival of each switch-media event, whereupon it identifies any "continuously mounted" media that are present in the media drives to serve associated ongoing storage tasks such as event-driven backup operations. The system determines the idle/busy status of the continuously mounted storage media. For each idle storage medium, the system issues instructions to perform a "swap" including demounting the storage medium and mounting a replacement storage medium in substitution therefor. For busy storage media, the system schedules later performance of the swap. Optionally, a system operator may manually trigger commencement of the swap operations.

The foregoing features may be implemented in a number of different forms. For example, the invention may be implemented to provide a method to manage continuously mounted removable data storage media. In another embodiment, the invention may be implemented to provide an apparatus such as a data storage system configured as described herein for managing continuously mounted removable data storage media. In still another embodiment, the invention may be implemented to provide a signal-bearing medium tangibly embodying a program of machine-readable instructions executable by a digital data processing apparatus to manage continuously mounted removable data storage media as discussed herein. Another embodiment concerns logic circuitry having multiple interconnected electrically conductive elements configured to manage continuously mounted removable data storage media as discussed herein.

The invention affords its users with a number of distinct advantages. For example, by supporting the use of continuously mounted backup media, the invention helps minimize resource consuming operations such as media allocation and media mount/demount activity. Namely, removable storage media remain mounted to serve repeating storage operations of an application. Unlike prior approaches, however, the invention minimizes exposure to data loss because storage media are automatically demounted and substituted with new media regardless of whether the media have reached their data capacity. Demounted storage media are therefore freed for convenient removal to a safe location, such as a fire-proof container, off-site location, etc. Advantageously, the switch-media operation may be invisible to the ongoing storage task associated with the swapped media. The invention also provides a number of other advantages and benefits, which should be apparent from the following

### description of the invention.

### BRIEF DESCRIPTION OF THE DRAWINGS

**FIGURE 1** is a block diagram of the hardware components and interconnections of a data storage system according to the invention.
**FIGURE 2** is a block diagram of a digital data processing machine according to the invention.
**FIGURE 3** shows an exemplary signal-bearing medium according to the invention.
**FIGURE 4** is a flowchart showing a process performing selectively triggered, transparent swapping of continuously mounted removable data storage media according to the invention.

### DETAILED DESCRIPTION

The nature, objectives, and advantages of the invention will become more apparent to those skilled in the art after considering the following detailed description in connection with the accompanying drawings.

### HARDWARE COMPONENTS & INTERCONNECTIONS

### Introduction

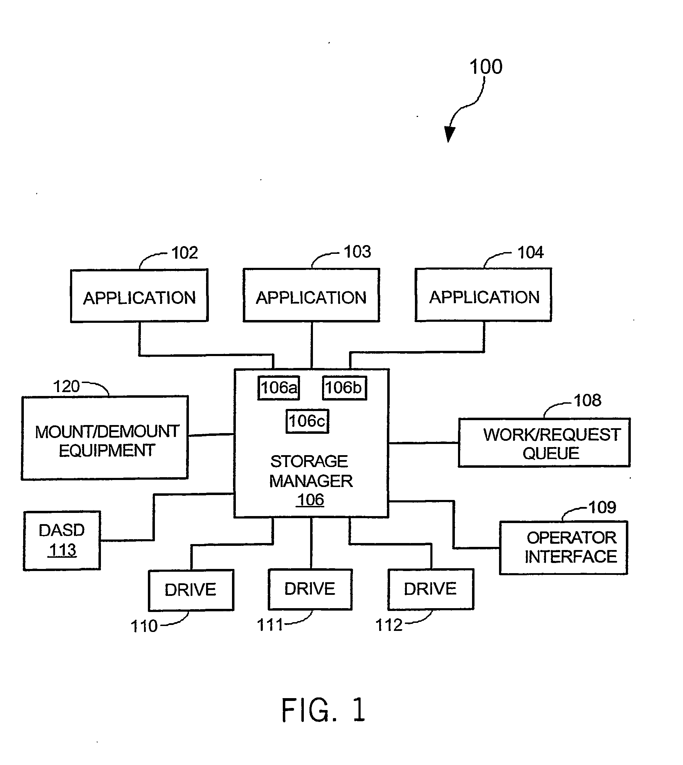

One aspect of the invention concerns a data storage system, which may be embodied by various hardware components and interconnections, with one example being described in FIGURE 1. The system 100 includes a storage manager 106 coupled to various applications 102-104, data storage facilities provided one or more direct-access storage devices (DASD) 113 and media drives 110-112, mount/demount equipment 120 to selectively couple removable data storage media to the drives 110-112, a work/request queue 108, and an operation interface 109.

### Applications

The storage system 100 includes one or more applications 102-104, although a greater or lesser number may be used. The applications 102-104 comprise application software programs, computer workstations, servers, personal computers, mainframe computers, manually activated operator terminals, and the like. The applications 102-104 represent application programs that utilize the storage manager 106 to store and retrieve data using data storage available to the storage manager. Namely, the applications 102-104 request the storage manager 106 to store data files, records, blocks, pages, or data items, whereupon the storage manager 106 carries out the appropriate data storage operations using the DASD 113 and/or removable storage media mounted to drives 110-112. There may also be one or more processes 106a-106c internal to the storage manager 106 that utilize storage provided by the drives 110-112 and DASD 113.

To help preserve its own operating efficiency, the storage manager 106 may minimize mount/demount operations and media allocation operations conducted on behalf of the applications 102-104 and/or processes 106a-106c by supporting "continuously mounted" storage media. Namely, depending upon the number and utilization of drives 110-112, the presence of a storage task (i.e., an application 102-104 or process 106a-106c) with an ongoing need to store data, and the quantity of data to be continuously stored by an application, the storage manager 106 may specify that the task utilize media whose mounting persists throughout the completion of many distinct, event-driven file storage operations. With the continuous mounting, the media remains mounted in anticipation of future storage work, even when its associated storage task does not have any work at the moment. Each continuously mounted storage medium may remain mounted, for example, until reaching its storage capacity.

### Storage Manager

The storage manager 106 comprises computer-driven equipment capable of managing operations of multiple storage drives 110-112. The storage manager 106 may be implemented by a variety of different hardware devices, such as a personal computer, server, computer workstation, mainframe computer, etc. Furthermore, the storage manager 106 may even share common hardware with one or more of the applications 102-104. As a specific example, the storage manager 106 may comprise a commercially available product such as an IBM brand Data Facility Storage Management Subsystem Hierarchical Storage Manager (DFSMShsm) product. The storage manager 106 is coupled to a removable media work/request queue 108, which comprises one or more digital data storage devices or data structures that may be provided separately from the storage manager 106, or integrated therewith. The work/request queue 108 contains storage "jobs" awaiting performance by the drives 110-112.

In the illustrated example, the storage manager 106 includes various processes 106a-106c. One of these processes 106a-106c, for example, may comprise a backup program that creates various backup files upon the media drives 110-112. As an alternative, the backup program may be implemented as one of the applications 102-104. Like the applications 102-104, the backup program implements event-driven backup operations requesting the media drives 110-112 to store backup copies of data on removable storage media mounted to the drives 110-112. As with the applications 102-104 and other processes 106a-106c as discussed above, the backup program may contribute to the reduction of mount/demount operations and media allocation operations by utilizing continuously mounted storage media.

### Storage Drives

Each of the media drives 110-112 comprises a machine to conduct read/write operations with a data storage medium that is removably attached to the media drive. As one example, the drives 110-112 may comprise magnetic tape drives such as IBM model 3590-E1A tape drives. In this example, the storage media comprise removable magnetic tape units housed in cartridges. Other examples of removable storage media include optical storage media, compact magnetic disk storage, or other appropriate technologies.

### Mount/Demount Equipment

The system 100 may also includes automated mount/demount equipment 120. The equipment 120 serves to mount tapes into the drives 110-112 and demount tapes from the drives 110-112. In one example, such equipment may be provided by separate cartridge loaders or other equipment local to each drive. In another example, the equipment 120 may be provided by a robotic arm or other component with universally access to all drives 110-112. As an alternative to the mechanized equipment 120, or in assistance thereto, a human operator may perform mount/demount operations.

### Operator Interface

The system 100 also includes an operator interface 109, used by a system administrator or other human operator to communicate with the storage manager 106. Although ordinarily skilled artisans will recognize varied implementations of the operator interface 109, some examples include components such as a cathode ray tube (CRT) monitor, liquid crystal display (LCD) flat panel display, keyboard, computer mouse, mechanical devices (such as buttons, dials, switches, etc.), voice recognition devices, audio speakers, eye-operated pointing devices, etc.

### Exemplary Digital Data Processing Apparatus

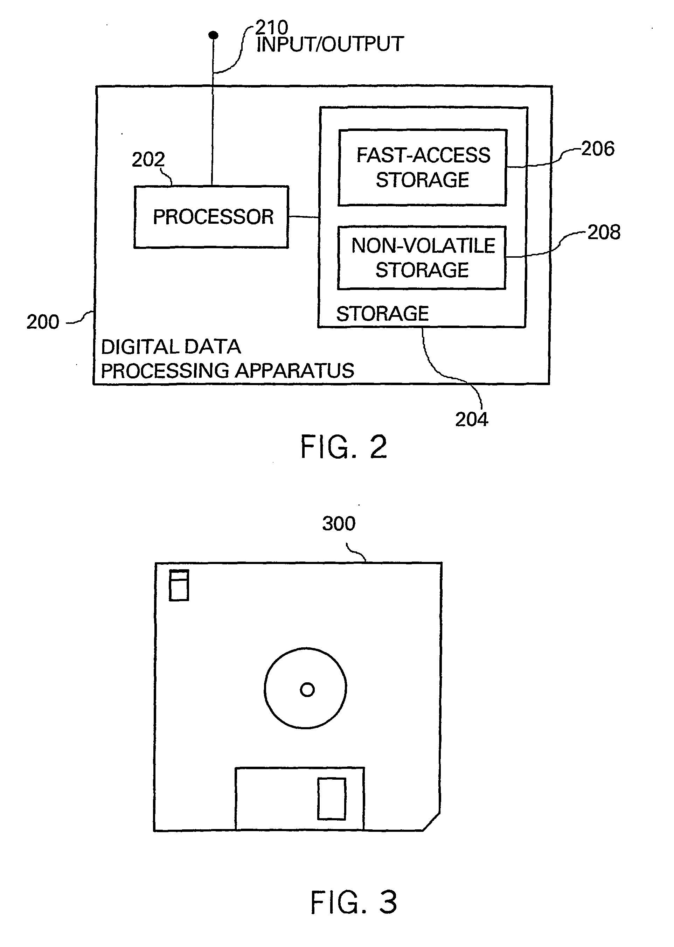

As mentioned above, the storage manager 106 may be implemented in various forms. As one example, the storage manager 106 may comprise a digital data processing apparatus, as exemplified by the hardware components and interconnections of the digital data processing apparatus 200 of FIGURE 2.

The apparatus 200 includes a processor 202, such as a microprocessor or other processing machine, coupled to a storage 204. In the present example, the storage 204 includes a fast-access storage 206, as well as nonvolatile storage 208. The fast-access storage 206 may comprise random access memory ("RAM"), and may be used to store the programming instructions executed by the processor 202. The nonvolatile storage 208 may comprise, for example, one or more magnetic data storage disks such as a "hard drive," a tape drive, or any other suitable storage device. The apparatus 200 also includes an input/output 210, such as a line, bus, cable, electromagnetic link, or other means for the processor 202 to exchange data with other hardware external to the apparatus 200.

Despite the specific foregoing description, ordinarily skilled artisans (having the benefit of this disclosure) will recognize that the apparatus discussed above may be implemented in a machine of different construction, without departing from the scope of the invention. As a specific example, one of the components 206, 208 may be eliminated; furthermore, the storage 204 may be provided on-board the processor 202, or even provided externally to the apparatus 200.

### Logic Circuitry

In contrast to the digital data processing apparatus discussed above, a different embodiment of the invention uses logic circuitry instead of computer-executed instructions to implement the storage manager 106. Depending upon the particular requirements of the application in the areas of speed, expense, tooling costs, and the like, this logic may be implemented by constructing an application-specific integrated circuit ("ASIC") having thousands of tiny integrated transistors. Such an ASIC may be implemented with CMOS, TTL, VLSI, or another suitable construction. Other alternatives include a digital signal processing chip ("DSP"), discrete circuitry (such as resistors, capacitors, diodes, inductors, and transistors), field programmable gate array ("FPGA"), programmable logic array ("PLA"), and the like.

### OPERATION

Having described the structural features of the present invention, the method aspect of the present invention will now be described. As mentioned above, the method aspect of the invention involves the operations of demounting continuously mounted idle storage media and substitutes replacement media therefor.

### Signal-Bearing Media

In the context of FIGURE 1, such a method may be implemented, for example, by operating the storage manager 106, as embodied by a digital data processing apparatus 200, to execute a sequence of machine-readable instructions. These instructions may reside in various types of signal-bearing media. In this respect, one aspect of the present invention concerns signal-bearing media tangibly embodying a program of machine-readable instructions executable by a digital data processor to selectively demount continuously mounted removable storage media in favor of substitute media.

This signal-bearing media may comprise, for example, RAM (not shown) contained within the storage manager 106, as represented by the fast-access storage 206. Alternatively, the instructions may be contained in another signal-bearing media, such as a magnetic data storage diskette 300 (FIGURE 3), directly or indirectly accessible by the processor 202. Whether contained in the storage 206, diskette 300, or elsewhere, the instructions may be stored on a variety of machine-readable data storage media, such as direct access storage (e.g., a conventional "hard drive," redundant array of inexpensive disks ("RAID"), or other DASD type devices, magnetic tape, electronic read-only memory (e.g., ROM, EPROM, or EEPROM), optical storage (e.g., CD-ROM, WORM, DVD, digital optical tape), paper "punch" cards, or other suitable signal-bearing media including digital or analog transmission media and communication links and wireless. In an illustrative embodiment of the invention, the machine-readable instructions may comprise software object code, compiled from a language such as "C," etc.

### Logic Circuitry

In contrast to the signal-bearing medium discussed above, the method aspect of the invention may be implemented using logic circuitry, without using a processor to execute instructions. In this embodiment, the logic circuitry is implemented in the storage manager 106, and is configured to perform operations to implement the method of the invention. The logic circuitry may be implemented using many different types of circuitry, as discussed above.

### Overall Sequence of Operation

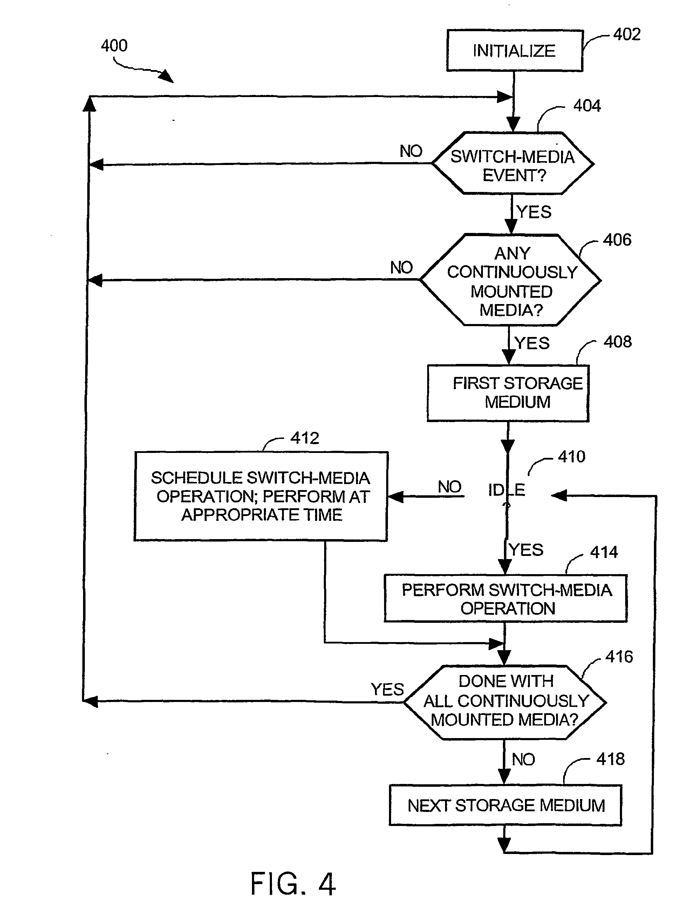

FIGURE 4 shows a sequence 400 to illustrate one example of the method aspect of the present invention. For ease of explanation, but without any intended limitation, the example of FIGURE 4 is described in the context of the data storage system 100 described above, and more particularly in context of storage operations conducted by internal processes 106a-106c of the storage director 106. Broadly, the sequence 400 responds to operator-specified switch-media events by examining all continuously mounted storage media. Idle data storage media are demounted and substituted with replacement media. Busy storage media are scheduled for demounting and replacement as soon as practicable.

The sequence 400 begins in step 402, where the storage manager 106 is initialized regarding the treatment of continuously mounted data storage media. For example, standards are set as to when a storage medium qualifies as "idle." As one example, a storage medium may be considered "idle" if it is not presently carrying out any Read or Write operations. Idle status may further require the subject medium to be free of any work or requests in the queue 108. Another example of "idle" specifies that no work is assigned for processing on the subject storage medium and the queue 108 is empty of any work requests for the medium. The foregoing characterization of "idle" may be defined by initial programming of the storage manager 106, or subsequent operator specification utilizing the interface 109, etc.

Also in step 402, the storage manager 106 receives input designating "switch-media events." Each switch-media event may constitute a future time-of-day, expiration of a timer, storage event, condition of the system 100, or other occurrence detectable by the storage manager 106. As explained below, switch-media events trigger the storage manager's removal/replacement of continuously mounted media. Switch-media events may be universally applicable to all continuously mounted storage media, or different switch-media events may be defined for different ongoing storage tasks. Step 402 may involve the storage manager 106 receiving designation of the switch-media events by initial installation programming or construction, by input from a system administrator or other suitable personnel via the interface 109. The switch-media events are preferably selected to occur with sufficient frequency to substantively protect against loss of accumulated data while still avoiding excessive allocate, mount, and demount operations.

Advantageously, the storage manager 106 is programmed such that the initialization of step 402 may be repeated in order to change any of the initialized parameters, such as the definitions of idle, switch-media events, etc. As an additional, or alternative feature, the storage manager 106 may be re-initialized "on the fly" after step 402 by updating memory or other storage containing the foregoing parameters referenced by the storage manager 106.

After initialization, the storage manager 106 waits until one of the designated switch-media events occurs (step 404). In the present example, a switch-media event pertinent to the process 106a (per initialization step 402) is assumed to occur. At that time, the storage manager 106 embarks upon certain switch-media processing to automatically remove and replace each continuously mounted storage medium that is servicing the process 106a. As mentioned above, switch-media events may include predefined future events such as arrival of predetermined time, expiration of a timer, occurrence of a system event in the storage manager 106, etc. As an alternative to the task-specific switch-media event in this example, universal switch-media events may be defined, triggering media swapping for all continuously mounted media regardless of the application or process served. Step 404 also recognizes a "forced" switch-media event, which occurs when a system administrator or other system operator manually directs the storage manager 106 to initiate switch-media processing. The system administrator may cause the forced switch-media event, for example, by entering appropriate commands with the interface 109. The forced switch-media event effectively deems a switch-media event to occur immediately. After occurrence of a forced switch-media event, the storage manager 106 may continue to honor the predefined switch-media events designated in step 402, or these switch-media events may be canceled depending upon the needs of the particular implementation.

Responsive to switch-media events (step 404), then the storage manager 106 embarks upon a series of operations to automatically identify, remove, and replace each continuously mounted storage medium. In the present example, the switch-media event under discussion concerns the process 106a. Thus, in step 406, the storage manager 106 asks whether there are any continuously mounted storage media mounted to one or more drives 110-112, where such media are servicing the ongoing storage tasks of process 106a. If not, there is no need to perform any swap operations, and step 406 returns to step 404 to await the next switch-media event. If the drives 110-112 do include any continuously mounted media serving the process 106a, then the storage manager 106 proceeds to consider a first one of the media in step 408. This storage medium becomes the "current" storage medium, as discussed in the explanation of FIGURE 4. In step 410, the storage manager 106 determines whether the current storage medium is "idle" (as "idle" is defined in the initialization step 402).

If the current storage medium is idle, the storage manager 106 performs a media "swap" ("switch-media") operation, where it directs the corresponding drive 110-112 to demount this storage medium and mount a replacement storage medium (step 414). For most applications, the replacement medium may constitute an empty storage medium. The swap operation of step 414 may be performed so that they are transparent to the applications 102-104 and/or processes 106a-106c. In the case of the applications 102-104, this transparency is achieved by using the storage manager 106 to perform the sequence 400 (and step 414 in particular). In the case of the processes 106a-106c, transparency may be preserved by using a different processing thread (not shown) of the storage manager 106 to perform the sequence 400. As part of step 414, the storage manager 106 internally suspends any future storage operations that it would normally perform on behalf of the task that owns current storage medium until the switch-media operation completes. This suspension may be transparent to the current medium's ongoing storage task.

After step 414, the storage manager 106 in step 416 asks whether all continuously mounted media pertinent to the current switch-media event have been processed by steps 408-414. If not, the storage manager 106 considers another continuously mounted storage medium in step 418, making this the "current" storage medium, thereafter returning to step 410 (discussed above).

In contrast to the foregoing sequence, step 412 is performed if step 410 finds that the current storage medium is "busy" conducting a Read or Write operation on behalf of an ongoing storage task for an application 102-104 or process 106a-106c. Namely, because the current storage medium is busy, the storage manager 106 in step 412 schedules future performance of a swap operation for the current storage medium.
Scheduling may occur in various ways. In one example, the storage manager 106 waits until the storage medium's current Read/Write operation fully completes. In another example, the storage manager 106 waits for the current Read/Write operation to reach a non-destructive, intermediate stopping point or "break point" before performing the swap operation.

Some examples of intermediate stopping points include completion of a request in progress, reading the end of a file or set of files in the current read or write operation, etc. To proceed with minimal delay, the swap operation may be performed after completing the least amount of work before gracefully reaching a stopping point at which no data is lost from the current read or write operation, and from which processing can resume without error. A break point is non-destructive if the task using the medium can be interrupted without losing any data or pending requests.

As a different alternative, the storage manager 106 may estimate completion time of the Read/Write operation that is causing the current medium to be "busy," and schedule performance of the swap operation at the estimated completion time, or a fixed time thereafter. As still another approach, step 412 may actively instruct the busy drive 110-112 to abort the Read/Write operation that is preventing the current storage medium from being idle, and then direct the drive to demount the storage medium. Such an abort instruction may be given immediately upon commencement of step 412, or after some time to nominally allow completion of the current operation. After step 412, the routine 400 progresses to step 416, which is explained above. When all pertinent continuously mounted storage media have been considered and processed, step 416 recognizes this condition and accordingly returns to step 404 to wait for the next switch-media event.

### OTHER EMBODIMENTS

While the foregoing disclosure shows a number of illustrative embodiments of the invention, it will be apparent to those skilled in the art that various changes and modifications can be made herein without departing from the scope of the invention as defined by the appended claims. Furthermore, although elements of the invention may be described or claimed in the singular, the plural is contemplated unless limitation to the singular is explicitly stated. Additionally, ordinarily skilled artisans will recognize that operational sequences must be set forth in some specific order for the purpose of explanation and claiming, but the present invention contemplates various changes beyond such specific order.

## Claims

1. A method for automatically managing continuously mounted removable storage media of very large capacity (113) in a data storage system (100), said storage system including a plurality of media drives (110 - 112) for said media of very large capacity, comprising the operations of:
the system receiving (402) designation of at least one predefined switch-media event (404); and
responsive to receipt (402) of each designated predefined switch-media event (404), performing switch-media processing by the steps of:
identifying (406) any storage media of very large capacity mounted to the media drives to serve associated ongoing storage tasks utilizing the mounted media;
determining (410) an idle/busy status of each identified continuously mounted storage medium of very large capacity;
for each continuously mounted storage medium of very large capacity having the idle status, issuing instructions to perform (414) demounting said storage medium of very large capacity regardless of whether the medium has reached its data capacity and mounting a replacement storage medium of very large capacity; and
for each continuously mounted storage medium of very large capacity having the busy status, delaying (416) said issuing of instructions to perform the demounting of said storage medium of very large capacity and the mounting of a replacement storage medium of very large capacity, regardless of whether the medium has reached its data capacity.

2. The method of claim 1, the operation of delaying the demounting said storage medium and mounting a replacement storage medium comprising:
issuing the instructions such that the demounting said storage medium and mounting a replacement storage medium is performed at a non-destructive break point in storage activity causing the busy status.

3. The method of claim 1, the delaying of the demounting said storage medium and mounting a replacement storage medium comprising:
estimating completion time of storage activity causing the storage medium to be busy; and
scheduling the demounting said storage medium and mounting a replacement storage medium to occur in relation to the estimated completion time.

4. The method of claim 1, the operation of delaying the demounting said storage medium and mounting a replacement storage medium comprising:
suspending storage activity causing the storage medium to be busy, issuing instructions to perform the demounting said storage medium and mounting a replacement storage medium operation, and then resuming the storage activity after completion of the demounting said storage medium and mounting a replacement storage medium.

5. The method of claim 1, where the operation of issuing the instructions comprises directing the instructions to mount/demount machinery.

6. The method of claim 1, where:
at least some of the designated switch-media events are specific to certain storage tasks;
responsive to arrival of each designated switch-media event specific to a storage task, the identifying operation identifies storage media mounted to the media drives in service of the certain storage tasks.

7. The method of claim 1, further comprising the data storage system detecting a forced switch-media input from an operator, and responsive thereto, initiating the switch-media processing independent of arrival of designated switch-media events.

8. The method of claim 1, the instructions to perform the demounting said storage medium and mounting a replacement storage medium operation being issued such that the demounting said storage medium and mounting a replacement storage medium operations are non-destructive to the ongoing storage tasks.

9. The method of claim 1, where:
the demounting said storage medium and mounting a replacement storage medium operations are conducted so as to be transparent to the ongoing storage tasks.

10. A computer usable medium comprising a computer readable program for causing a computer or a data storage system (100) thereof for automatically managing removable storage media of very large capacity (113) without the intervention of an external source during ongoing writing of data of said storage system and including a plurality of media drives (110 - 112) for said media of very large capacity to perform the following steps when said computer program is executed on the computer or the data storage system (100):
performing operations for automatically managing removable storage media of very large capacity in a data storage system including a plurality of media drives, the operations comprising:
the system receiving (402) designation of at least one predefined switch-media event (404); and
responsive to receipt (402) of each designated predefined switch-media event (404), performing switch-media processing by the steps of:
identifying (406) any storage media of very large capacity mounted to the media drives to serve associated ongoing storage tasks utilizing the mounted media;
determining (410) an idle/busy status of each identified mounted storage medium of very large capacity;
for each mounted storage medium of very large capacity having the idle status, issuing instructions to perform (414) demounting said storage medium of very large capacity regardless of whether the medium has reached its data capacity and mounting a replacement storage medium of very large capacity; and
for each mounted storage medium of very large capacity having the busy status, delaying (416) said issuing of instructions to perform the demounting of said storage medium of very large capacity and the mounting of a replacement storage medium of very large capacity, regardless of whether the medium has reached its data capacity.

11. The medium of claim 10, where the computer program comprises steps, that the operation of delaying demounting said storage medium and mounting a replacement storage medium comprises:
issuing the instructions such that the demounting said storage medium and mounting a replacement storage medium is performed at a non-destructive break point in storage activity causing the busy status.

12. The medium of claim 10, where the computer program comprises steps, that the delaying of the demounting of said storage medium and mounting a replacement storage medium comprises:
estimating completion time of storage activity causing the storage medium to be busy; and
scheduling the demounting said storage medium and mounting a replacement storage medium operations for the medium to occur in relation to the estimated completion time.

13. The medium of claim 10, where the computer program comprises steps, that the operation of delaying the demounting of said storage medium and mounting a replacement storage medium comprises:
suspending storage activity causing the storage medium to be busy, issuing instructions to perform the demounting said storage medium and mounting a replacement storage medium operation, and then resuming the storage activity after completion of the demounting said storage medium and mounting a replacement storage medium.

14. The medium of claim 10, where the computer program comprises steps, that the operation of issuing the instructions comprises directing the instructions to mount/demount machinery.

15. The medium of claim 10, where the computer program comprises steps, that:
at least some of the designated switch-media events are specific to certain storage tasks;
responsive to arrival of each designated switch-media event specific to a storage task, the identifying operation identifies storage media mounted to the media drives in service of the certain storage tasks.

16. The medium of claim 10, where the computer program comprises steps, that further the data storage system detects a forced switch-media input from an operator, and responsive thereto, initiates the switch-media processing independent of arrival of designated switch-media events.

17. The medium of claim 10, where the computer program comprises steps, that the instructions to perform the demounting of said storage medium and mounting a replacement storage medium operations being issued such that the demounting of said storage medium and mounting a replacement storage medium operations are non-destructive to the ongoing storage tasks.

18. The medium of claim 10, where the computer program comprises steps, that:
the operations are conducted so as to be transparent

19. A logic circuit of multiple interconnected electrically conductive elements configured to perform operations to automatically manage removable storage media of very large capacity (113) in a data storage system (100) without the intervention of an external source during ongoing writing of data of said storage system including a plurality of media drives (110 - 112), the operations comprising:
the system receiving (402) designation of at least one predefined switch-media event (404); and
responsive to receipt (402) of each designated predefined switch-media event (404), performing switch-media processing by the steps of:
identifying (406) any storage media of very large capacity mounted to the media drives to serve associated ongoing storage tasks utilizing the mounted media;
determining (410) the idle/busy status of each identified mounted storage medium of very large capacity;
for each mounted storage medium of very large capacity having an idle status, issuing instructions to perform (414) demounting said storage medium of very large capacity regardless of whether the medium has reached its data capacity and mounting a replacement storage medium of very large capacity; and
for each mounted storage medium of very large capacity having a busy status, delaying (416) said issuing of instructions to perform the demounting of said storage medium of very large-capacity and the mounting of a replacement storage medium of very learge capacity, regardless of whether the medium has reached its data capacity.

20. A data storage system (100), comprising:
a plurality of media drives for storage media of very large capacity (110 - 112);
at least one item of data storage media (113) removably mountable to the media drive (110 - 112); and
a storage manager (106) programmed to automatically manage the removable storage media of very large capacity without the intervention of an external source during ongoing writing of data of said storage system (113) by performing operations comprising:
the system receiving (402) designation of at least one predefined switch-media event (404); and
responsive to receipt (402) of each designated predefined switch-media event (404), performing switch-media processing by the steps of:
identifying (406) any storage media of very large capacity mounted to the media drives to serve associated ongoing storage tasks utilizing the mounted media;
determining (410) the idle/busy status of each identified mounted storage medium of very large capacity;
for each mounted storage medium of very large capacity having an idle status, issuing instructions to perform (414) demounting said storage medium of very large capacity regardless of whether the medium has reached its data capacity and mounting a replacement storage medium of very large capacity; and
for each mounted storage medium of very large capacity having a busy status, delaying (416) said issuing of instructions to perform the demounting of said storage medium of very large capacity and the mounting of a replacement storage medium of very large-capacity, regardless of whether the medium has reached its data capacity.

## Patentansprüche

1. Verfahren zur automatischen Verwaltung kontinuierlich installierter Wechselspeichermedien mit sehr großer Speicherkapazität (113) in einem Datenspeichersystem (100), wobei das Speichersystem eine Vielzahl von Medienlaufwerken (110 bis 112) für die Medien mit sehr großer Speicherkapazität beinhaltet und das Verfahren die folgenden Operationen umfasst:
Empfangen (402) der Festlegung mindestens eines vordefinierten Medienwechselereignisses (404) durch das System; und
Durchführen des Medienwechsels, als Reaktion auf das Empfangen (402) jedes festgelegten vordefinierten Medienwechselereignisses (404), durch die folgenden Schritte:
Erkennen (406) eines Speichermediums mit sehr großer Speicherkapazität, das in den Medienlaufwerken installiert ist, um mit Hilfe des installierten Mediums zugewiesene laufende Speichertasks zu unterstützen;
Ermitteln (410) eines Status INAKTIV/AKTIV jedes erkannten kontinuierlich installierten Speichermediums mit sehr großer Speicherkapazität;
für jedes kontinuierlich installierte Speichermedium mit sehr großer Speicherkapazität mit dem Status INAKTIV, Ausgeben von Anweisungen zum Ausbauen (414) des Speichermediums mit sehr großer Speicherkapazität, unabhängig davon, ob das Medium seine Datenspeicherkapazität erreicht hat, und Installieren eines Ersatzspeichermediums mit sehr großer Speicherkapazität; und
für jedes kontinuierlich installierte Speichermedium mit sehr großer Speicherkapazität mit dem Status AKTIV, Verzögern (416) des Ausgebens von Anweisungen zum Ausbauen des Speichermediums mit sehr großer Speicherkapazität und zum Installieren eines Ersatzspeichermediums mit sehr großer Speicherkapazität, unabhängig davon, ob das Medium seine Datenspeicherkapazität erreicht hat.

2. Verfahren nach Anspruch 1, bei welchem das Verzögern des Ausbauens des Speichermediums und des Installierens eines Ersatzspeichermediums Folgendes umfasst:
Ausgeben der Anweisungen in der Weise, dass das Ausbauen des Speichermediums und das Installieren eines Ersatzspeichermediums zu einem verlustsicheren Unterbrechungspunkt während der Speicheraktivität erfolgt, welche das Speichermedium in den Status AKTIV versetzt.

3. Verfahren nach Anspruch 1, bei welchem das Verzögern des Ausbauens des Speichermediums und des Installierens eines Ersatzspeichermediums Folgendes umfasst:
Abschätzen der Zeitdauer bis zur Beendigung der Speicheraktivität, welche das Speichermedium in den Status AKTIV versetzt; und
Vormerken des Ausbauens des Speichermediums und des Installierens eines Ersatzspeichermediums für einen Zeitpunkt, der in einer Beziehung zu dem abgeschätzten Zeitpunkt der Beendigung der Speicheraktivität steht.

4. Verfahren nach Anspruch 1, bei welchem das Verzögern des Ausbauens des Speichermediums und des Installierens eines Ersatzspeichermediums Folgendes umfasst:
Unterbrechen der Speicheraktivität, welche das Speichermedium in den Status AKTIV versetzt, Ausgeben von Anweisungen zum Ausbauen des Speichermediums und zum Installieren eines Ersatzspeichermediums und anschließend Wiederaufnahme der Speicheraktivität, nach Beendigung des Ausbauens des Speichermediums und des Installierens eines Ersatzspeichermediums.

5. Verfahren nach Anspruch 1, bei welchem das Ausgeben der Anweisungen das Erteilen der Anweisungen an die Installations-/Ausbauvorrichtung umfasst.

6. Verfahren nach Anspruch 1, bei welchem:
mindestens einige der festgelegten Medienwechselereignisse speziell für bestimmte Speichertasks vorgesehen sind;
als Reaktion auf das Eintreffen jedes für eine Speichertask spezifischen festgelegten Medienwechselereignisses, Erkennen der Speichermedien, die in den Medienlaufwerken installiert sind, welche die entsprechenden Speichertasks unterstützen, durch die Erkennungsoperation.

7. Verfahren nach Anspruch 1, welches ferner das Erkennen einer Eingabe eines Bedieners zum erzwungenen Medienwechsel durch das Datensicherungssystem und, als Reaktion darauf, das Auslösen des Medienwechsel umfasst, unabhängig davon, ob festgelegte Medienwechselereignisse eintreffen.

8. Verfahren nach Anspruch 1, bei welchem die Anweisungen zum Ausbauen des Speichermediums und zum Installieren eines Ersatzspeichermediums so ausgegeben werden, dass das Ausbauen des Speichermediums und das Installieren eines Ersatzspeichermediums keinen Datenverlust bei der laufenden Speichertask bewirkt.

9. Verfahren nach Anspruch 1, bei welchem:
das Ausbauen des Speichermediums und das Installieren eines Ersatzspeichermediums so durchgeführt wird, dass es für die laufenden Speichertasks transparent ist.

10. Medium zur Verwendung in einem Computer, welches ein computerlesbares Programm umfasst, das einen Computer oder ein Datenspeichersystem (100) des Computers zur automatischen Verwaltung von Wechselspeichermedien mit sehr großer Speicherkapazität (113) veranlasst, ohne dass eine externe Quelle in laufende Datenschreibvorgänge des Speichersystems eingreift, wobei der Computer oder das Datenspeichersystem eine Vielzahl von Medienlaufwerken (110 bis 112) für die Medien mit sehr großer Speicherkapazität zum Ausführen der folgenden Schritte beinhaltet, wenn das Computerprogramm auf dem Computer oder auf dem Datenspeichersystem (100) ausgeführt wird:
Ausführen von Operationen zur automatischen Verwaltung von Wechselspeichermedien mit sehr großer Speicherkapazität in einem Datenspeichersystem, welches eine Vielzahl von Medienlaufwerken beinhaltet, wobei die Operationen folgende Schritte umfassen:
Empfangen (402) der Festlegung mindestens eines vordefinierten Medienwechselereignisses (404) durch das System; und
Durchführen des Medienwechsels, als Reaktion auf das Empfangen (402) jedes festgelegten vordefinierten Medienwechselereignisses (404), durch die folgenden Schritte:
Erkennen (406) eines Speichermediums mit sehr großer Speicherkapazität, das in den Medienlaufwerken installiert ist, welche mit Hilfe des installierten Mediums zugewiesene laufende Speichertasks unterstützen;
Ermitteln (410) eines Status INAKTIV/AKTIV jedes erkannten installierten Speichermediums mit sehr großer Speicherkapazität;
für jedes installierte Speichermedium mit sehr großer Speicherkapazität mit dem Status INAKTIV, Ausgeben von Anweisungen zum Ausbauen (414) des Speichermediums mit sehr großer Speicherkapazität unabhängig davon, ob das Medium seine Datenspeicherkapazität erreicht hat, und Installieren eines Ersatzspeichermediums mit sehr großer Speicherkapazität; und
für jedes installierte Speichermedium mit sehr großer Speicherkapazität mit dem Status AKTIV, Verzögern (416) der Ausgabe von Anweisungen zum Ausbauen des Speichermediums mit sehr großer Speicherkapazität und zum Installieren eines Ersatzspeichermediums mit sehr großer Speicherkapazität, unabhängig davon, ob das Medium seine Datenspeicherkapazität erreicht hat.

11. Medium nach Anspruch 10, bei welchem das Computerprogramm Schritte in der Weise umfasst, dass das Verzögern des Ausbäuens des Speichermediums und des Installierens eines Ersatzspeichermediums folgenden Schritt umfasst:
Ausgeben der Anweisungen in der Weise, dass das Ausbauen des Speichermediums und das Installieren eines Ersatzspeichermediums während eines verlustfreien Unterbrechungspunktes der Speicheraktivität erfolgt, die das Speichermedium in den Status AKTIV versetzt.

12. Medium nach Anspruch 10, bei welchem das Computerprogramm Schritte in der Weise umfasst, dass das Verzögern des Ausbauens des Speichermediums und des Installierens eines Ersatzspeichermediums folgende Schritte umfasst:
Abschätzen eines Zeitpunkts für die Beendigung der Speicheraktivität, welche das Speichermedium in den Status AKTIV versetzt; und
Vormerken des Ausbauens des Speichermediums und des Installierens eines Ersatzspeichermediums für einen Zeitpunkt, der in Beziehung zu dem abgeschätzten Zeitpunkt für die Beendigung der Speicheraktivität steht.

13. Medium nach Anspruch 10, bei welchem das Computerprogramm Schritte in der Weise umfasst, dass das Verzögern des Ausbauens des Speichermediums und des Installierens eines Ersatzspeichermediums folgende Schritte umfasst:
Unterbrechen der Speicheraktivität, welche das Speichermedium in den Status AKTIV versetzt, Ausgeben von Anweisungen zum Ausbauen des Speichermediums und zum Installieren eines Ersatzspeichermediums und anschließend Wiederaufnehmen der Speicheraktivität nach Beendigung des Ausbauens des Speichermediums und des Installierens eines Ersatzspeichermediums.

14. Medium nach Anspruch 10, bei welchem das Computerprogramm Schritte in der Weise umfasst, dass das Ausgeben der Anweisungen das Erteilen der Anweisungen an die Installations-/Ausbauvorrichtung umfasst.

15. Medium nach Anspruch 10, bei welchem das Computerprogramm Schritte in der Weise umfasst, dass:
mindestens einige der festgelegten Medienwechselereignisse speziell für bestimmte Speichertasks vorgesehen sind;
als Reaktion auf das Eintreffen jedes für eine Speichertask spezifischen festgelegten Medienwechselereignisses, Erkennen der Speichermedien, die in den Medienlaufwerken installiert sind, welche die bestimmten Speichertasks unterstützen, durch die Erkennungsoperation.

16. Medium nach Anspruch 10, bei welchem das Computerprogramm Schritte in der Weise umfasst, dass das Datensicherungssystem ferner eine Eingabe von einem Bediener zum erzwungenen Medienwechsel erkennt und als Reaktion darauf den Medienwechsel auslöst, unabhängig davon, ob festgelegte Medienwechselereignisse eintreffen.

17. Medium nach Anspruch 10, bei welchem das Computerprogramm Schritte in der Weise umfasst, dass die Anweisungen zum Ausbauen des Speichermediums und zum Installieren eines Ersatzspeichermediums so ausgegeben werden, dass das Ausbauen des Speichermediums und das Installieren eines Ersatzspeichermediums keinen Datenverlust bei der laufenden Speichertask bewirkt.

18. Medium nach Anspruch 10, bei welchem das Computerprogramm Schritte in der Weise umfasst, dass die Operationen transparent ausgeführt werden.

19. Logikschaltung aus mehreren miteinander verbundenen elektrisch leitenden Bauelementen, die zum Ausführen von Operationen zur automatischen Verwaltung von Wechselspeichermedien mit sehr großer Speicherkapazität (113) in einem Datenspeichersystem (100) ohne den Eingriff einer externen Quelle während laufender Datenschreibvorgänge des Speichersystems, das eine Vielzahl von Medienlaufwerken (110 bis 112) beinhaltet, konfiguriert ist, wobei die Operationen folgende Schritte umfassen:
Empfangen (402) der Festlegung mindestens eines vordefinierten Medienwechselereignisses (404) durch das System; und
Durchführen des Medienwechsels, als Reaktion auf das Empfangen (402) jedes festgelegten vordefinierten Medienwechselereignisses (404), durch die folgenden Schritte:
Erkennen (406) eines Speichermediums mit sehr großer Speicherkapazität, das in den Medienlaufwerken installiert ist, um mit Hilfe des installierten Mediums zugewiesene laufende Speichertasks zu unterstützen;
Ermitteln (410) des Status INAKTIV/AKTIV jedes erkannten installierten Speichermediums mit sehr großer Speicherkapazität;
für jedes installierte Speichermedium mit sehr großer Speicherkapazität mit einem Status INAKTIV, Ausgeben von Anweisungen zum Ausbauen (414) des Speichermediums mit sehr großer Speicherkapazität, unabhängig davon, ob das Medium seine Datenspeicherkapazität erreicht hat, und Installieren eines Ersatzspeichermediums mit sehr großer Speicherkapazität; und
für jedes installierte Speichermedium mit sehr großer Speicherkapazität mit einem Status AKTIV, Verzögern (416) des Ausgebens von Anweisungen zum Ausbauen des Speichermediums mit sehr großer Speicherkapazität und zum Installieren eines Ersatzspeichermediums mit sehr großer Speicherkapazität, unabhängig davon, ob das Medium seine Datenspeicherkapazität erreicht hat.

20. Datenspeichersystem (100), welches Folgendes umfasst:
eine Vielzahl von Medienlaufwerken für Speichermedien mit sehr großer Speicherkapazität (110 bis 112);
mindestens ein Exemplar der Datenspeichermedien (113), das wechselbar in das Medienlaufwerk (110 bis 112) installiert werden kann; und
einen Speichermanager (106), der zum automatischen Verwalten der Wechselspeichermedien mit sehr großer Speicherkapazität programmiert ist, ohne dass eine externe Quelle in laufende Datenschreibvorgänge im Datenspeichersystem (113) eingreift, wobei der Speichermanager Operationen ausführt, die folgende Schritte umfassen:
Empfangen (402) der Festlegung mindestens eines vordefinierten Medienwechselereignisses (404) durch das System; und
Durchführen des Medienwechsels, als Reaktion auf das Empfangen (402) jedes festgelegten vordefinierten Medienwechselereignisses (404), durch die folgenden Schritte:
Erkennen (406) eines Speichermediums mit sehr großer Speicherkapazität, das in den Medienlaufwerken installiert ist, um mit Hilfe des installierten Mediums zugewiesene laufende Speichertask zu unterstützen;
Ermitteln (410) des Status INAKTIV/AKTIV jedes erkannten installierten Speichermediums mit sehr großer Speicherkapazität;
für jedes installierte Speichermedium mit sehr großer Speicherkapazität mit einem Status INAKTIV, Ausgeben von Anweisungen zum Ausbauen (414) des Speichermediums mit sehr großer Speicherkapazität, unabhängig davon, ob das Medium seine Datenspeicherkapazität erreicht hat, und Installieren eines Ersatzspeichermediums mit sehr großer Speicherkapazität; und
für jedes installierte Speichermedium mit sehr großer Speicherkapazität mit einem Status AKTIV, Verzögern (416) des Ausgebens von Anweisungen zum Ausbauen des Speichermediums mit sehr großer Speicherkapazität und zum Installieren eines Ersatzspeichermediums mit sehr großer Speicherkapazität, unabhängig davon, ob das Medium seine Datenspeicherkapazität erreicht hat.

## Revendications

1. Un procédé pour gérer automatiquement des supports amovibles de stockage montés en continu de très grande capacité (113) dans un système de stockage de données (100), ledit système de stockage comprenant une pluralité d'unités de support (110 à 112) pour lesdits supports à très grande capacité, comprenant les opérations suivantes :
réception (402), par le système, d'une désignation d'au moins un événement de support de commutation (404) prédéfini ; et
en réponse à la réception (402) de chaque événement de support de commutation (404) prédéfini désigné, accomplissement du traitement de support de commutation par les étapes suivantes :
identification (406) de tout support de stockage de très grande capacité, monté sur les unités de support pour accomplir des tâches de stockage continuant associées en utilisant les supports montés ;
détermination (410) d'un état attente/occupé de chaque support de stockage monté en continu, identifié, de très grande capacité ;
pour chaque support de stockage monté en continu, de très grande capacité, placé en état d'attente, envoi des instructions pour accomplir (414) le démontage dudit support de stockage de très grande capacité indépendamment du fait de savoir si le support a atteinte sa capacité en données et montage d'un support de stockage de remplacement de très grande capacité ; et
pour chaque support de stockage monté en continu, de très grande capacité, placé en état occupé, retardement (416) dudit envoi d'instructions pour accomplir le démontage desdits supports de stockage de très grande capacité et le montage d'un support de stockage de remplacement de très grande capacité, indépendamment du fait que le support a atteint sa capacité en données.

2. Le procédé selon la revendication 1, l'opération de retardement du démontage dudit support de stockage et de montage d'un support de stockage de remplacement comprenant :
l'envoi des instructions pour que le démontage desdits support de stockage et le montage d'un support de stockage de remplacement soit accompli à un point de rupture non destructif de l'activité de stockage, provoquant l'état occupé.

3. Le procédé selon la revendication 1, le retard du démontage dudit support de stockage et du montage d'un support de stockage de remplacement comprenant :
l'estimation du temps d'achèvement de l'activité de stockage, provoquant le passage à l'état occupé du support de stockage ; et
la programmation du démontage dudit support de stockage et du montage d'un support de stockage de
remplacement devant se produire en relation avec le temps d'achèvement estimé.

4. Le procédé selon la revendication 1, l'opération de retardement du démontage dudit support de stockage et du montage d'un support de stockage de remplacement comprenant :
la suspension de l'activité de stockage provoquant la mise à l'état occupé du support de stockage, l'envoi d'instructions devant provoquer l'opération de démontage dudit support de stockage et de montage d'un support de stockage de remplacement, puis la reprise de l'activité de stockage après achèvement du démontage dudit support de stockage et du montage d'un support de stockage de remplacement.

5. Le procédé selon la revendication 1, dans lequel l'opération d'envoi d'instructions comprend l'envoi des instructions à la machine de montage/démontage.

6. Le procédé selon la revendication 1, dans lequel :
au moins l'un des évènements à support commuté désigné sont spécifiques à certaines tâches de stockage ;
en réponse à l'arrivée de chaque évènement de support à commutation désignée, spécifique à une tâche de stockage, l'opération d'identification identifie le support de stockage monté sur les unités de support qui sont en service pour accomplir certaines tâches de stockage.

7. Le procédé selon la revendication 1, comprenant en outre la détection, par le système de stockage de données, d'une entrée forcée de supports de commutation de la part d'un opérateur et, en réponse à cela, le lancement du traitement de support à commutation, indépendamment de l'arrivée des évènements de commutation de support désignés.

8. Le procédé selon la revendication 1, les instructions pour l'accomplissement de l'opération de démontage dudit support de stockage et de montage d'un support de stockage de remplacement sont envoyées de manière que les opérations de démontage dudit support de stockage et de montage d'un support de stockage de remplacement soient de nature non destructives pour les tâches de stockage en cours.

9. Le procédé selon la revendication 1, dans lequel :
les opérations de démontage dudit support de stockage et de montage d'un support de stockage de remplacement sont conduites de manière à être transparentes vis-à-vis des tâches de stockage en cours.

10. Un support utilisable par ordinateur, comprenant un programme lisible par ordinateur, pour qu'un ordinateur, ou un système de stockage de données (100) de celui-ci, gère automatiquement des supports de stockage amovibles de très grande capacité (113), sans l'intervention d'une source externe durant l'écriture en cours des données dudit système de stockage, et comprenant une pluralité d'unités supports (110 à 112) pour lesdits supports de très grande capacité, afin d'accomplir les étapes suivantes lorsque ledit programme de l'ordinateur est exécuté sur l'ordinateur ou le système de stockage de données (100) :
accomplissement d'opérations pour gérer automatiquement des supports amovibles de stockage de très grande capacité dans un système de stockage de données incluant une pluralité d'unités à support, les opérations comprenant :
réception, par le système (402), d'une désignation d'au moins un événement à support à commutation (404) prédéfini ; et
en réponse à la réception (402) de chaque événement de support à commutation (404) prédéfini désigné, accomplissement du traitement des supports à commutation, par les étapes suivantes :
identification (406) de tout support de stockage de très grande capacité monté sur les unités à support, pour accomplir des tâches de stockage continues associées, en utilisant les supports montés ;
détermination (410) d'un état d'attente/occupé de chaque support de stockage monté et identifié, de très grande capacité ;
pour chaque support de stockage monté de très grande capacité, ayant l'état d'attente, envoi d'instructions pour accomplir (414) le démontage dudit support de stockage de très grande capacité, indépendamment du fait que le support ait atteint sa capacité en données, et le montage d'un support de données de remplacement de très grande capacité ; et
pour chaque support de stockage monté de très grande capacité, ayant l'état occupé, le retardement (416) dudit envoi d'instructions pour accomplir le démontage dudit support de stockage de très grande capacité et le montage d'un support de stockage de remplacement de très grande capacité, indépendamment du fait de savoir si le support a atteint sa capacité en données.

11. Le support selon la revendication 10, dans lequel le programme pour ordinateur comprend des étapes faisant que l'opération, de retardement du démontage dudit support de stockage et du montage d'un support de stockage de remplacement, comprend :
l'envoi des instructions, de manière que le démontage dudit support de stockage et le montage d'un support de stockage de remplacement soient accomplis à un point de rupture non destructif dans l'activité de stockage, provoquant l'état occupé.

12. Le support selon la revendication 10, dans lequel le programme pour ordinateur comprend les étapes, telles que le retard du démontage dudit support de stockage et du montage d'un support de stockage de remplacement comprend :
l'estimation du temps d'achèvement de l'activité de stockage provoquant le passage à l'état occupé du support de stockage ; et
la programmation des opérations de démontage dudit support de stockage et du montage d'un support de stockage de remplacement pour le support, afin qu'elles se déroulent en relation avec le temps d'achèvement estimé.

13. Le support selon la revendication 10, dans lequel le programme pour ordinateur comprend les étapes faisant que l'opération de retardement du démontage dudit support de stockage et du montage d'un support de remplacement comprend :
la mise en suspension de l'activité de stockage provoquant le passage à l'état occupé du support de stockage, l'envoi d'instructions pour accomplir l'opération de démontage dudit support de stockage et de montage d'un support de stockage de remplacement, puis la reprise de l'activité de stockage, après achèvement du démontage dudit support de stockage et du montage d'un support de stockage de remplacement.

14. Le support selon la revendication 10, dans lequel le programme pour ordinateur comprend des étapes faisant que l'opération d'envoi des instructions comprend l'envoi des instructions à la machine de montage/démontage.

15. Le support selon la revendication 10, dans lequel le programme pour ordinateur comprend les étapes faisant qu'
au moins certains des évènements à support à commutation désignée sont spécifiques à certaines tâches de stockage ;
en réponse à l'arrivée de chaque évènement de support à commutation désignée, spécifique à une tâche de stockage, l'opération d'identification identifie des supports de stockage montés sur l'unité à support, en cours d'accomplissement de certaines tâches de stockage.

16. Le support selon la revendication 10, dans lequel le programme pour ordinateur comprend les étapes faisant qu'en outre le système de stockage de données détecte une entrée de support à commutation forcée de la part d'un opérateur et, en réponse à cela, le lancement du traitement de supports à commutation, indépendamment de l'arrivée des évènements de supports à commutation désignés.

17. Le support selon la revendication 10, dans lequel le programme pour ordinateur comprend les étapes faisant que les instructions d'accomplissement des opérations, de démontage dudit support de stockage et de montage d'un support de stockage de remplacement, sont envoyées de manière que les opérations de démontage dudit support de stockage et de montage d'un support de stockage de remplacement soient de nature non destructive pour les tâches de stockage en cours.

18. Le support selon la revendication 10, dans lequel le programme pour ordinateur comprend les étapes faisant que
les opérations sont conduites de façon à être transparentes.

19. Un circuit logique formé d'une pluralité d'éléments conducteurs d'électricité interconnectés configurés pour accomplir des opérations pour gérer automatiquement des supports de stockage amovibles de stockage de très grande capacité (113) dans un système de stockage de données (100), sans l'intervention d'aucune source durant l'écriture en cours de données dudit système de stockage incluant une pluralité d'unités de support (110 à 112), les opérations comprenant :
la réception (402) par le système de la désignation d'au moins un événement de support à commutation (404) prédéfini ;
en réponse à la réception (402) de chaque événement à support à commutation (404) prédéfini désigné, l'accomplissement d'un traitement à support à commutation par les étapes consistant à :
l'identification (406) de tout support de stockage de très grande capacité monté sur les unités à support pour accomplir des tâches de stockage en cours associées, en utilisant les supports montés ;
la détermination (410) de l'état en attente/occupé de chaque support de stockage monté identifié de très grande capacité ;
pour chaque support de stockage monté de très grande capacité, situé en état d'attente, l'envoi des instructions pour accomplir (414) le démontage dudit support de stockage de très grande capacité, indépendamment de savoir si le support a atteint sa capacité en données, et le montage d'un support de stockage de remplacement de très grande capacité ; et
pour chaque support de stockage monté, de très grande capacité, ayant un état occupé, le retardement (416) dudit envoi d'instructions pour accomplir le démontage dudit support de stockage de très grande capacité et le montage d'un support de stockage de remplacement de très grande capacité,
indépendamment du fait que le support a atteint sa capacité en données.

20. Un système de stockage de données (100), comprenant :
une pluralité d'unités à support pour stocker des supports de très grande capacité (110+112) ;
au moins un exemplaire des supports de stockage de données (113) pouvant être montés de façon amovible sur l'unité à supports (110 à 112) ; et
un gestionnaire de stockage (106), programmé pour gérer automatiquement les supports amovibles de stockage de très grande capacité, sans l'intervention d'une source externe durant l'écriture en cours de données dudit système de stockage (113) en accomplissant des opérations comprenant :
la réception (402), par le système, de la désignation d'au moins un événement de support à commutation (404) prédéfini ; et
en réponse à la réception (402) de chaque événement de support à commutation (404) prédéfini désigné, l'accomplissement d'un traitement à support à commutation par les états consistant à :
identifier (406) tout support de stockage de très grande capacité montée sur les unités à supports, pour accomplir des tâches de stockage en cours associées, en utilisant les supports montés ;
déterminer (410) l'état attente/occupé de chaque support de stockage monté identifié de très grande capacité ;
pour chaque support de stockage monté de très grande capacité ayant un état d'attente, envoyer des instructions pour accomplir (410) le démontage dudit support de stockage de très grande capacité, indépendamment du fait que le support a atteint sa capacité en données, et le montage d'un support de stockage de remplacement de très grande capacité ; et
pour chaque support de stockage monté de très grande capacité situé en état occupé, retarder (416) ledit envoi d'instructions pour accomplir le démontage dudit support de stockage de très grande capacité et le montage d'un support de stockage de remplacement de très grande capacité, indépendamment du fait de savoir si le milieu a reçu ses données de capacité.
